# EUROPEAN PATENT APPLICATION

(11) **EP 4 280 147 A1**
(43) Date of publication of application: **22.11.2023**
(21) Application number: 22756204.8
(22) Date of filing: 16.02.2022
(51) Int. Cl.: G06Q 30/06

(54) **INFORMATION NOTIFICATION DEVICE**

(30) Priority: 17.02.2021 JP 2021023566
(71) Applicant: ASICS Corporation, Kobe-shi Hyogo 650-8555 (JP)
(72) Inventor: KUSANO, Ken, Kobe-shi, Hyogo 650-8555 (JP); SHIINA, Ippei, Kobe-shi, Hyogo 650-8555 (JP); ICHIKAWA, Masaru, Kobe-shi, Hyogo 650-8555 (JP); KUSUMI, Hiroyuki, Kobe-shi, Hyogo 650-8555 (JP); KAWASAKI, Toshiaki, Kobe-shi, Hyogo 650-8555 (JP)
(74) Representative: TBK
(86) International application number: PCT/JP2022/006091
(87) International publication number: WO 2022/176886

(57) **Abstract**

An information notification device (10A) includes a longitudinal-data storage unit (12) that accumulates, for a plurality of samples, longitudinal data indicating a temporal change in foot size of one sample, a user-data storage unit (13) that stores user data containing a gender, an age, and a past foot size of a prediction target person, a foot-size prediction unit (14) that predicts, based on a current foot size of the prediction target person and the longitudinal data, a change in foot size of the prediction target person in a period from a current point in time to a future point in time, and a notification processing unit (15) that displays, on a display unit (11), the prediction of the change in foot size of the prediction target person in the period from the current point in time to the future point in time.

## Description

### Field

The present invention relates to an information notification device that predicts a change in foot size of a prediction target person and displays the change on a display unit.

### Background

It is necessary to wear shoes with an appropriate foot size including the foot length, the foot girth, and the arch height of a wearer, and wearing inappropriately sized shoes causes hallux valgus or shoe sores.

Since foot size changes with age, even shoes having an optimum size for the current foot size can no longer be the optimal size for the foot size in the future.

Patent Literature 1 discloses an invention to predict a change in height and notify a user of a determination result as to whether clothing is wearable after a certain period of time. When the invention disclosed in Patent Literature 1 is applied to a prediction of foot size, it is possible to notify a user of a determination result as to whether currently used shoes is wearable after a certain period of time.

### Citation List

### Patent Literature

Patent Literature 1: JP 2019-105924 A

### Summary

### Technical Problem

Shoe purchasers can purchase shoes that are not the optimal size for their current foot size, but the appropriate size for their future foot size. For example, a purchaser of shoes for a child can purchase shoes that are one size larger to be optimal for the foot size at a future point in time in anticipation of the child's growth.

However, there are individual differences in foot size changes with age. In addition, even for the same person, the amount of change in foot size during a certain period of time varies depending on the age in months. Therefore, the appropriate length of use for a pair of shoes depends on the individual and the age in months. For this reason, a prediction of a change in foot size can be wrong, and the purchased shoes can quickly become tight, or the shoes can remain too large for a long period of time after purchase.

Even if the invention disclosed in Patent Literature 1 is applied to a prediction of foot size, it only notifies a user of a determination result as to whether shoes is wearable, and the user cannot know the prediction of how the foot size changes in the future.

The present invention has been made in view of the above, and a purpose of the present invention is to provide an information notification device capable of notifying a user of a prediction of a change in foot size in the future.

### Solution to Problem

In order to solve the above problem and achieve the object, an information notification device comprising: a longitudinal-data storage unit configured to accumulate, for a plurality of samples, longitudinal data indicating a temporal change in foot size of one sample; a user-data storage unit configured to store user data containing a gender, an age, and a past foot size of a prediction target person; a foot-size prediction unit configured to predict, based on a current foot size of the prediction target person and the longitudinal data, a change in foot size of the prediction target person in a period from a current point in time to a future point in time; and a notification processing unit configured to display, on a display unit, the prediction of the change in foot size of the prediction target person in the period from the current point in time to the future point in time.

### Advantageous Effects of Invention

An information notification device according to the present invention has an effect of capable of notifying a user of a prediction of a change in foot size in the future.

### Brief Description of Drawings

FIG. 1 is a diagram illustrating a configuration of an information notification device according to a first embodiment of the present invention.
FIG. 2 is a flowchart illustrating an operation procedure of the information notification device according to the first embodiment.
FIG. 3 is a diagram illustrating an example of a foot-size-change notification screen displayed on a display unit by the information notification device according to the first embodiment.
FIG. 4 is a diagram illustrating another example of the foot-size-change notification screen displayed on the display unit by the information notification device according to the first embodiment.
FIG. 5 is a diagram illustrating a configuration of an information notification device according to a second embodiment of the present invention.
FIG. 6 is a flowchart illustrating an operation procedure of the information notification device according to the second embodiment.
FIG. 7 is a diagram illustrating a configuration of an information notification device according to a third embodiment of the present invention.
FIG. 8 is a flowchart illustrating an operation procedure of the information notification device according to the third embodiment.
FIG. 9 is a diagram illustrating an example of a foot-size input screen displayed on a terminal device by the information notification device according to the third embodiment.
FIG. 10 is a diagram illustrating a configuration of an information notification device according to a fourth embodiment of the present invention.
FIG. 11 is a diagram illustrating an example of a foot-size-change notification screen displayed on a terminal device by the information notification device according to the fourth embodiment.
FIG. 12 is a diagram illustrating another example of the foot-size-change notification screen displayed on the terminal device by the information notification device according to the fourth embodiment.
FIG. 13 is a diagram illustrating still another example of the foot-size-change notification screen displayed on the terminal device by the information notification device according to the fourth embodiment.
FIG. 14 is a diagram illustrating a configuration of an information notification device according to a fifth embodiment of the present invention.
FIG. 15 is a diagram illustrating an example of a foot-size-change notification screen displayed on a terminal device by the information notification device according to the fifth embodiment.
FIG. 16 is a diagram illustrating an example of an event detail screen displayed on the terminal device by the information notification device according to the fifth embodiment.
FIG. 17 is a diagram illustrating another example of the foot-size-change notification screen displayed on the terminal device by the information notification device according to the fifth embodiment.
FIG. 18 is a diagram illustrating a configuration of an information notification device according to a sixth embodiment of the present invention.
FIG. 19 is a flowchart illustrating an operation procedure of the information notification device according to the sixth embodiment.
FIG. 20 is a scatter point illustrating an example of a correlation between the father's foot length and the child's foot length.
FIG. 21 is a scatter point illustrating an example of a correlation between the mother's foot length and the child's foot length.
FIG. 22 is a scatter point illustrating an example of a correlation between the father's height and the child's foot length.
FIG. 23 is a scatter point illustrating an example of a correlation between the mother's height and the child's foot length.
FIG. 24 is a diagram illustrating a relation between annual foot-length growth amount and age.
FIG. 25 is a diagram illustrating a relation between annual foot-length growth amount and foot-length growth attainment rate.
FIG. 26 is a diagram illustrating an effect of correction by a predicted-value correction unit of the information notification device according to the sixth embodiment.
FIG. 27 is a diagram illustrating a configuration of an information notification device according to a seventh embodiment of the present invention.
FIG. 28 is a flowchart illustrating an operation procedure of the information notification device according to the seventh embodiment.
FIG. 29 is a diagram illustrating an example of a foot-length growth type of a prediction target person.
FIG. 30 is a diagram illustrating an example of a foot-length growth type of a prediction target person.
FIG. 31 is a diagram illustrating an example of a foot-length growth type of a prediction target person.
FIG. 32 is a diagram illustrating an example of a foot-length growth type of a prediction target person.
FIG. 33 is a diagram illustrating a hardware configuration example of the information notification device according to the first to seventh embodiments. Description of Embodiments

Hereinafter, embodiments of an information notification device according to the present invention will be described in detail with reference to the drawings. Note that the present invention is not limited by the embodiments. In the following embodiments, the same or common parts are denoted by the same reference signs, and the description thereof will not be repeated.

In the following description, a case where a foot size means a foot length is described as an example, but the foot size may be a dimension of measurable parts, such as a foot girth and an arch height, and is not limited to a dimension of a specific part. Alternatively, the foot size may be a combination of dimensions of different parts of a foot, such as a foot length, a foot girth, and an arch height, or may be three-dimensional scan data about a foot of a prediction target person. In addition, the foot size is not only the size of the foot itself, but also the dimensions of the parts of a shoe corresponding to the foot length, the foot girth, the arch height, and the like may be regarded as the foot size.

### (First embodiment)

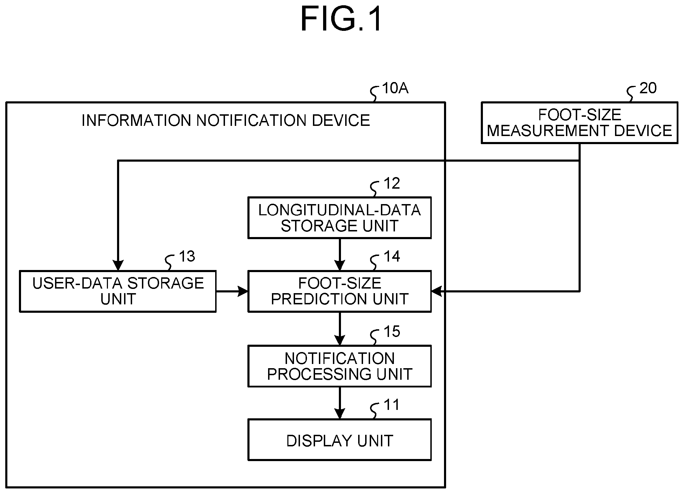

FIG. 1 is a diagram illustrating a configuration of an information notification device according to a first embodiment of the present invention. An information notification device 10A includes a display unit 11, a longitudinal-data storage unit 12, a user-data storage unit 13, a foot-size prediction unit 14, and a notification processing unit 15. The display unit 11 is a display device that displays information. The longitudinal-data storage unit 12 accumulates, for a plurality of samples, longitudinal data that is data following a temporal change in foot size of one sample, that is, growth of a foot size of a person. The user-data storage unit 13 stores user data containing a gender, an age, and a past foot size of a prediction target person. The foot-size prediction unit 14 predicts, based on a current foot size of the prediction target person and the longitudinal data, a change in foot size of the prediction target person in a period from a current point in time to a first point in time in the future. The notification processing unit 15 displays, on the display unit 11, the prediction of the change in foot size of the prediction target person in the period from the current point in time to the first point in time. To the display unit 11, a liquid crystal display or an organic electroluminescence display can be applied, but a display device other than these may be applied.

The information notification device 10A is connected to a foot-size measurement device 20. The foot-size measurement device 20 measures the current foot length of the prediction target person and outputs data about the measured current foot length. The data about the current foot length of the prediction target person is input to the foot-size prediction unit 14. The data about the current foot length of the prediction target person is accumulated in the user-data storage unit 13. Note that the information notification device 10A may be provided with an input interface, and the data about the current foot length of the prediction target person may be input through the input interface. Alternatively, the information notification device 10A may acquire the data about the current foot length of the prediction target person by communicating with another device that stores the data about the current foot length of the prediction target person.

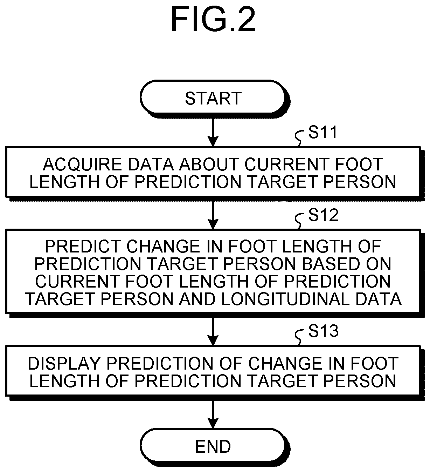

FIG. 2 is a flowchart illustrating an operation procedure of the information notification device according to the first embodiment. In step S11, the foot-size prediction unit 14 acquires the data about the current foot length of the prediction target person from the foot-size measurement device 20.

In step S12, the foot-size prediction unit 14 predicts, based on the current foot length of the prediction target person and the longitudinal data, a change in foot length of the prediction target person. As an example, the foot-size prediction unit 14 calculates an average increase in foot length by age from the longitudinal data and predicts the foot length for each age based on the current age in months and current foot size of the prediction target person and the average increase in foot length by age. The average increase in foot length can be calculated by extracting, from the longitudinal data, the increase in foot length at the target age for a sample of the same gender as the prediction target person and taking the average of a plurality of samples. The predicted foot length value for the birthday month in (X + 1) years old is expressed as the sum of the current foot length and the predicted increase from the current point in time to the birthday month in (X + 1) years old. Therefore, if the current age is X years old and the number of elapsed months from the birth month is Y months, the predicted increase from the current point in time to the birth month in (X + 1) years old is (average increase in foot length in (X + 1) years old) × (12 - Y)/12. Similarly, the predicted foot length value for the birthday month in (X + 2) years old is expressed as the sum of the predicted foot length value for the birthday month in (X + 1) years old and the average increase in foot length in (X + 2) years old.

Note that, if at least one of the weight of the prediction target person, the size of a hand of the prediction target person, the presence or absence of growth pain of the prediction target person, the foot length of a parent of the prediction target person, the height of a parent of the prediction target person, and the growth peak time of a parent of the prediction target person is known, the foot-size prediction unit 14 may correct the prediction of the change in foot length of the prediction target person based on these pieces of information. For example, if the weight or the size of the hand of the prediction target person is equal to or larger than the average value of the same age group, the foot length is expected to greatly increase in the future, and the change in foot length of the prediction target person can be corrected by adding a positive correction to the foot length. Alternatively, if the prediction target person has growth pain, the foot length is expected to greatly increase in the future, the change in foot length of the prediction target person can be corrected by adding a positive correction to the foot length. Alternatively, if the current age of the user exceeds the growth peak age of the parent of the prediction target person, a change in foot length is expected to be small in the future, and the change in foot length of the prediction target person can be corrected by adding a negative correction to the foot length. Alternatively, since the growth peak of the prediction target person is expected to be around the growth peak age of the parent of the prediction target person, if the age of the prediction target person is close to the growth peak age of the parent of the prediction target person, the change in foot length of the prediction target person can be corrected by adding a positive correction to the foot length.

In step S13, the notification processing unit 15 displays, on the display unit 11, a foot-size-change notification screen 90 showing the prediction of the change in foot length of the prediction target person. For example, the notification processing unit 15 displays, on the display unit 11, the prediction of the change in foot length of the prediction target person in a diagram or an image. The diagram is, for example, a scatter point showing the prediction of the change in foot length of the prediction target person as a point on a plane with the size of foot length on the vertical axis and time on the horizontal axis, but is not limited thereto. Note that a line interpolating between points may be displayed with the point. The line interpolating between points may be a line segment connecting the points or an approximate curve connecting the points. The diagram may be, for example, a bar graph.

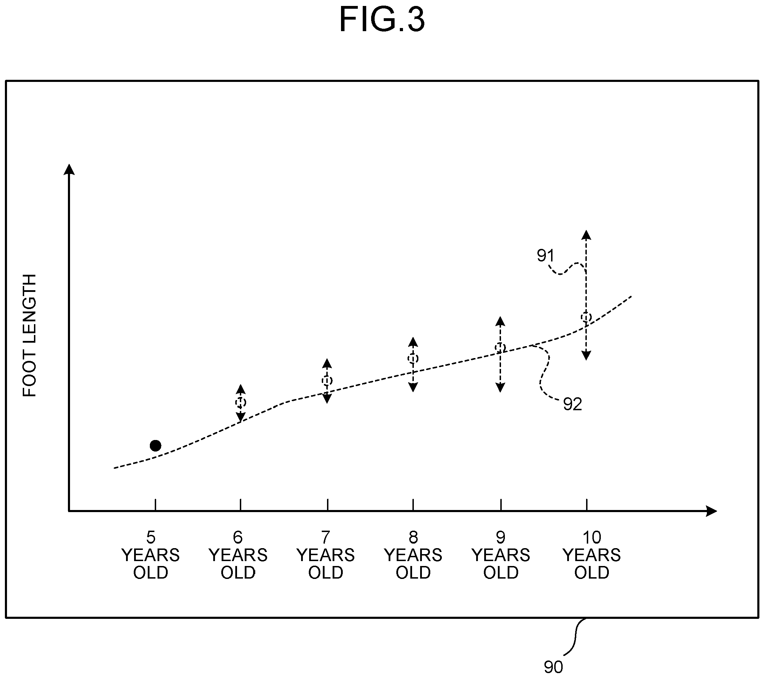

FIG. 3 is a diagram illustrating an example of the foot-size-change notification screen displayed on the display unit by the information notification device according to the first embodiment. The foot-size-change notification screen 90 includes a scatter point showing the foot length of the prediction target person as a point on a plane with the size of foot length on the vertical axis and time on the horizontal axis. On the foot-size-change notification screen 90, a standard deviation range 91 and a line 92 indicating an average foot length in a period from the current point in time to 5 years later are shown together with points of foot lengths. A white point with a broken line frame on the foot-size-change notification screen 90 indicates a predicted value of foot length in the future. By displaying at least one of the standard deviation range 91 and the line 92 indicating the average foot length together with the points of foot lengths, it is possible to read whether the foot length of the prediction target person is larger or smaller than that of a person of the same age.

Although the foot-size-change notification screen 90 illustrated in FIG. 3 has a scale on the horizontal axis for every year of age, the foot-size-change notification screen 90 may be enlarged to show every month by operation through the input interface.

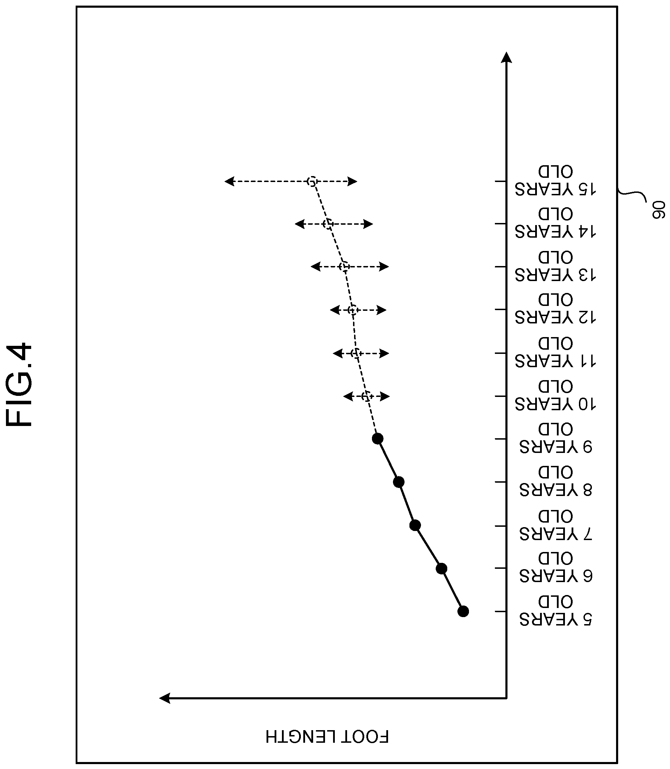

FIG. 4 is a diagram illustrating another example of the foot-size-change notification screen displayed on the display unit by the information notification device according to the first embodiment. The foot-size-change notification screen 90 includes a scatter point showing the foot length of the prediction target person as a point on a plane with the size of foot length on the vertical axis and time on the horizontal axis. On the foot-size-change notification screen 90, the past change in foot length of the prediction target person is displayed together with the prediction of the change in foot length. Similarly to FIG. 3, a white point with a broken line frame indicates a predicted value of foot length in the future. In addition, on the foot-size-change notification screen 90 illustrated in FIG. 4, a line interpolating between points indicating past foot lengths of the prediction target person is shown by a solid line, and a line that interpolates between points indicating predicted values of future foot lengths is shown by a broken line. By indicating the past change in foot length of the prediction target person together with the change in future foot length, the user can easily recognize the tendency of the change in foot length of the prediction target person. For example, it is possible to recognize a tendency that the change in foot length is small in the past, but the change in foot length becomes large after the current point in time.

Since the information notification device 10A according to the first embodiment displays the prediction of the change in foot size in the future on the display unit 11, the user who has viewed the prediction of the change in foot size displayed on the display unit 11 can refer to the predicted value when determining the size of shoe to be purchased. Therefore, it is possible for the user to easily select shoes having a size suitable for the future foot size of the prediction target person. For example, when the change in foot length is predicted to be large after the current point in time although the change in foot length was small in the past, the user can select a larger size when purchasing shoes or move the purchase time of shoes forward. Conversely, when the change in foot length is predicted to be small after the current point in time although the change in foot length was large in the past, the user can select a smaller size when purchasing shoes or postpone the purchase time of shoes.

Note that cross-sectional data containing data about the foot length for each age of at least one of a parent, an older brother, and an older sister of the prediction target person may be used. In that case, the foot-size prediction unit 14 may correct the predicted value of the change in foot size of the prediction target person based on the data about the foot length for each age of at least one of the parent, the older brother, and the older sister of the prediction target person. Since there is a correlation between the foot lengths of parents, older brothers, and older sisters of a prediction target person and the foot length of the prediction target person, it is possible to improve the accuracy of prediction of foot length of the prediction target person by performing such correction.

### (Second embodiment)

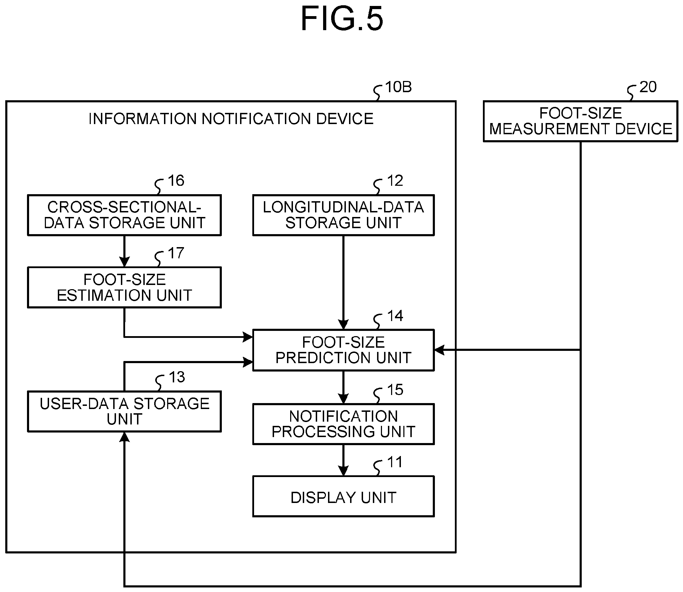

FIG. 5 is a diagram illustrating a configuration of an information notification device according to a second embodiment of the present invention. An information notification device 10B according to the second embodiment includes a cross-sectional-data storage unit 16 and a foot-size estimation unit 17. The cross-sectional-data storage unit 16 stores cross-sectional data accumulating, for each gender and age, data about foot sizes of a plurality of samples. The foot-size estimation unit 17 estimates a current foot size of a prediction target person based on user data and the cross-sectional data. The user data contains data about the height of the prediction target person or the size of the shoes owned by the prediction target person. The other configurations are similar to those of the information notification device 10A according to the first embodiment.

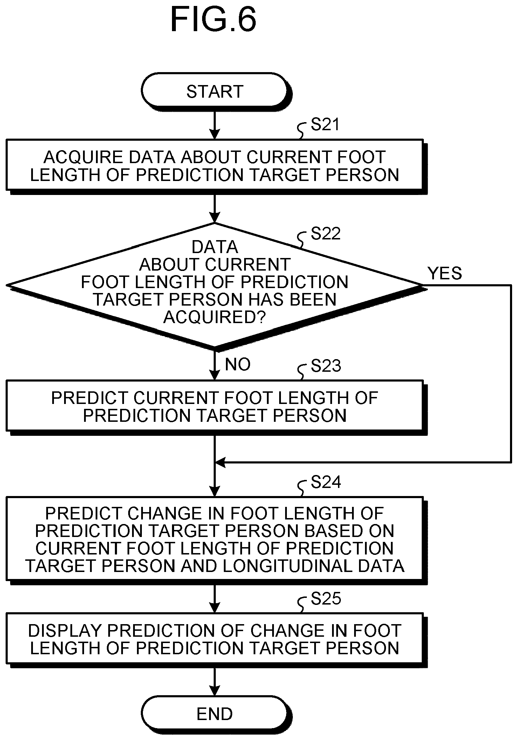

FIG. 6 is a flowchart illustrating an operation procedure of the information notification device according to the second embodiment. In step S21, a foot-size prediction unit 14 acquires data about a current foot length of the prediction target person from a foot-size measurement device 20. In step S22, the foot-size prediction unit 14 determines whether the data about the current foot length of the prediction target person has been acquired from the foot-size measurement device 20. When the data about the current foot length has not been acquired, which means No in step S22, the processing proceeds to step S23. When the data about the current foot length has been acquired, which means Yes in step S22, the processing proceeds to step S24. Note that in the case where the information notification device 10B acquires the data about the current foot length through input operation to an input interface, when the input operation to the input interface has been performed, this means Yes in step S22, and when the input operation has not been performed, this means No in step S22. Alternatively, in the case where the information notification device 10B acquires the data about the current foot length through communication with another device, when the data reception has failed due to a communication error or the like, this means No in step S22, and when the data has been normally received, this means Yes in step S22.

In step S23, the foot-size estimation unit 17 estimates the current foot size of the prediction target person based on the user data and the cross-sectional data. That is, the current foot length of the prediction target person is estimated by substituting the age in months of the prediction target person into a regression expression for foot length prediction that indicates the relation between age in months and foot length, which is created based on the cross-sectional data about the same gender as the prediction target person.

Note that, in a case where the dimension of a part of a human body correlated with foot size can be measured, the current foot length of the prediction target person can be estimated by substituting the measurement value of the prediction target person into a regression expression for foot length prediction that indicates the relation between the dimension of the part correlated with foot size and foot length. For example, if the height of the prediction target person is known, the current foot length of the prediction target person can be estimated by substituting the height of the prediction target person into a regression expression for foot length prediction that indicates the relation between height and foot length. The regression expression for foot length prediction that indicates the relation between the dimension of a part correlated with foot size and foot length can be created based on the cross-sectional data about the same gender as the prediction target person. Examples of a part of a human body that correlates with foot size include hand size and forearm length in addition to height, but are not limited thereto. Alternatively, even if the dimension of a part of a human body that correlates with foot size cannot be measured, the current foot length of the prediction target person can be estimated from the shoe size as long as the size of the shoes owned by the prediction target person is known.

The operations in steps S24 and S25 are similar to the operations in steps S12 and S13 of the information notification device 10A according to the first embodiment. However, when the current foot length of the prediction target person is estimated, the estimated value of the current foot length of the prediction target person is used in the processing in steps S24 and S25.

In the information notification device 10B according to the second embodiment, even if the current foot length of the prediction target person is unknown, the foot-size prediction unit 14 can predict the change in foot length using the estimated value estimated by the foot-size estimation unit 17. To measure foot length with the foot-size measurement device 20, it is necessary to take off shoes and socks, and measuring foot length takes time. The foot-size estimation unit 17 estimates the foot length from a dimension that can be easily measured such as height, hand size, or forearm length as compared with foot length, and it is possible to predict the change in foot length without causing the prediction target person to take time.

### (Third embodiment)

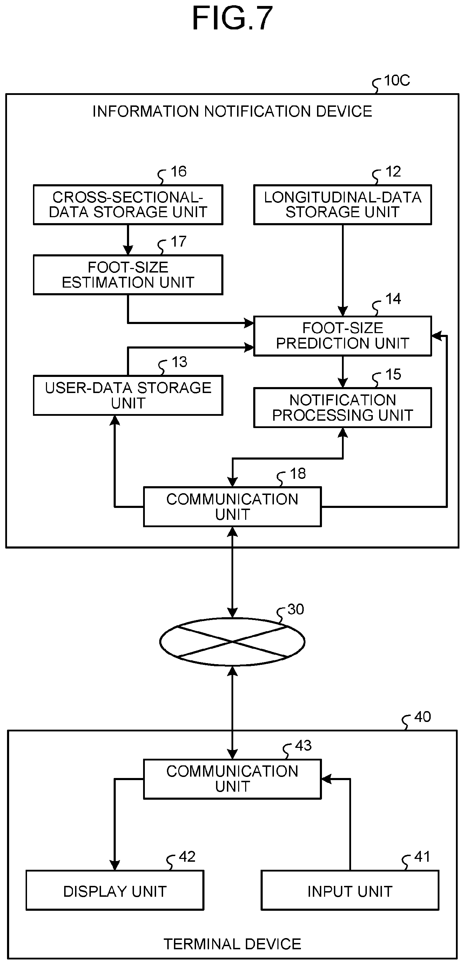

FIG. 7 is a diagram illustrating a configuration of an information notification device according to a third embodiment of the present invention. An information notification device 10C according to the third embodiment is different from the information notification device 10B according to the second embodiment in that the information notification device 10C includes a communication unit 18 and does not include a display unit 11. The information notification device 10C is connected to a terminal device 40 via a network 30. The communication unit 18 is a functional unit that performs communication via the network 30. The form of connection between the information notification device 10C and the network 30 can be either a wireless or a wired connection.

The terminal device 40 includes an input unit 41, a display unit 42, and a communication unit 43. The network 30 is, for example, the Internet, but may be a closed network. The terminal device 40 can be, for example, a personal computer, a smartphone, and a tablet terminal, but may be a device other than these. The input unit 41 can be, for example, a keyboard, a pointing device, and a touch panel, but may be an input device other than these. To the display unit 42, a liquid crystal display or an organic EL display can be applied, but a display device other than these may be applied. The communication unit 43 is a functional unit that performs communication via the network 30. The form of connection between the terminal device 40 and the network 30 can be either a wireless or a wired connection.

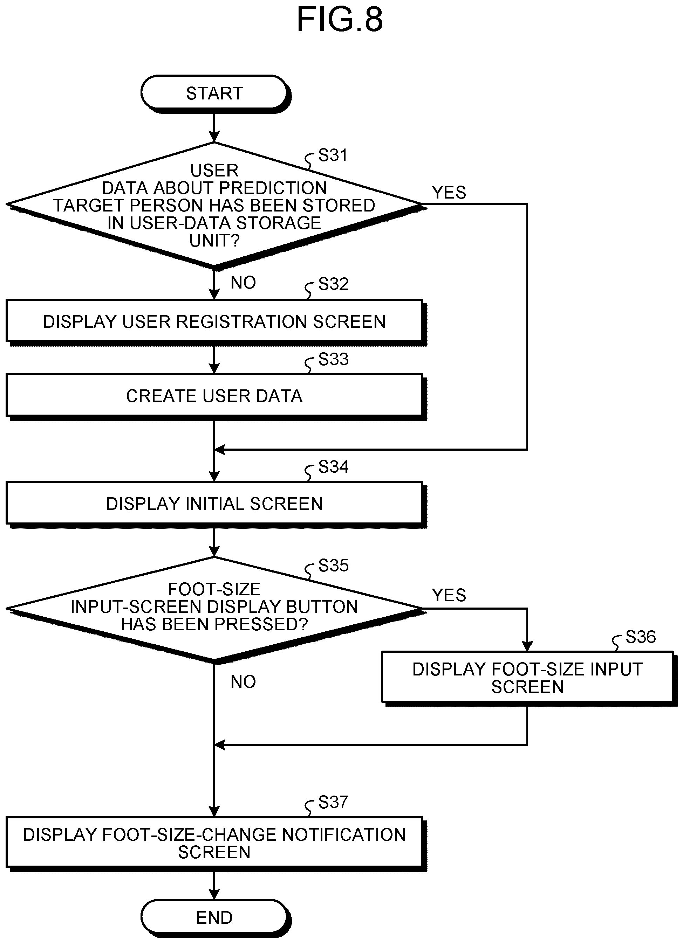

FIG. 8 is a flowchart illustrating an operation procedure of the information notification device according to the third embodiment. In step S31, a notification processing unit 15 determines whether user data about a prediction target person has been stored in a user-data storage unit 13. When the user data about the prediction target person has not been stored in the user-data storage unit 13, which means No in step S31, a user registration screen is displayed on the display unit 42 in step S32. The user registration screen includes input fields for gender and date of birth. In step S33, the notification processing unit 15 acquires information input on the user registration screen and creates the user data. When the user data about the prediction target person has been stored in the user-data storage unit 13, which means Yes in step S31, the processing proceeds to step S34.

In step S34, the notification processing unit 15 displays an initial screen on the display unit 42. The initial screen includes a foot-size input-screen display button and a skip button. In step S35, the notification processing unit 15 determines which of the foot-size input-screen display button and the skip button has been pressed. When the foot-size input-screen display button has been pressed, which means Yes in step S35, the notification processing unit 15 displays a foot-size input screen 50 on the display unit 42 in step S36, and the processing proceeds to step S37. On the other hand, when the skip button has been pressed, which means No in step S35, the notification processing unit 15 displays a foot-size-change notification screen 90 on the display unit 42 in step S37. Similarly to the first embodiment, the foot-size-change notification screen 90 is a screen that displays the past change in foot length of the prediction target person together with a prediction of the change in foot length in a period from a current point in time to a future point in time.

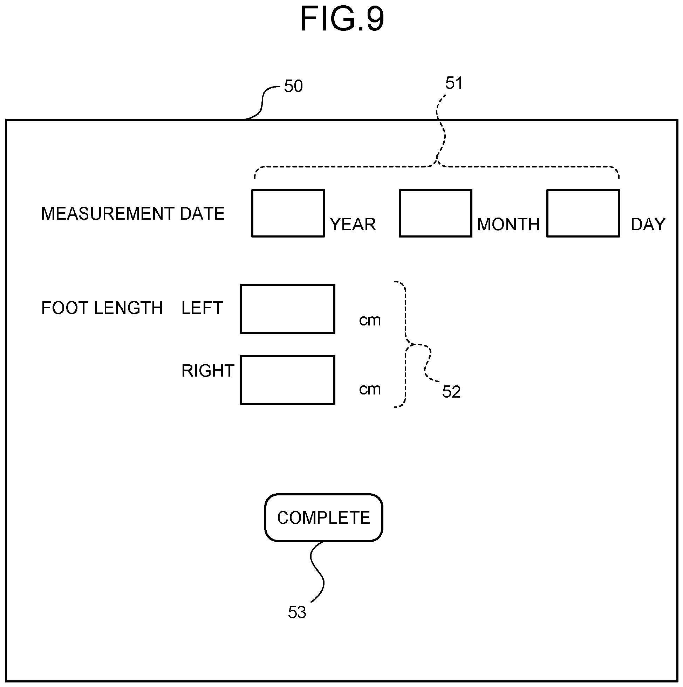

FIG. 9 is a diagram illustrating an example of the foot-size input screen displayed on the terminal device by the information notification device according to the third embodiment. The foot-size input screen 50 includes a measurement-date input field 51, a foot-length input field 52, and a completion button 53. When the completion button 53 is pressed, the measurement date input in the measurement-date input field 51 and the foot length input in the foot-length input field 52 are transmitted to the information notification device 10C via the network 30. The information notification device 10C updates the user data stored in the user-data storage unit 13 based on the received information about the measurement date and the foot length. As a result, the data about the past foot length contained in the user data stored in the user-data storage unit 13 contains the received measurement date and foot length. Note that the unit of display of foot size such as foot length may be appropriately changed depending on the preference of the user or the country in which the user lives. For example, the display in millimeters or the display in centimeters may be changed according to the preference of the user. In countries where the metric system is used, it may be displayed in millimeters or centimeters, and in countries where the yard-pound system is used, it may be displayed in inches.

The information notification device 10C according to the third embodiment displays the foot-size-change notification screen 90 on the display unit 42 of the terminal device 40 connected via the network 30, and the user can view the prediction of the change in foot length even in a place away from the information notification device 10C as long as the terminal device 40 can be connected to the network 30. Therefore, by using a portable information terminal, such as a smartphone or a tablet terminal, as the terminal device 40, it is possible for the user to refer to the prediction of the change in foot length at a shoe store to select the size of shoes to be purchased when purchasing shoes.

### (Fourth embodiment)

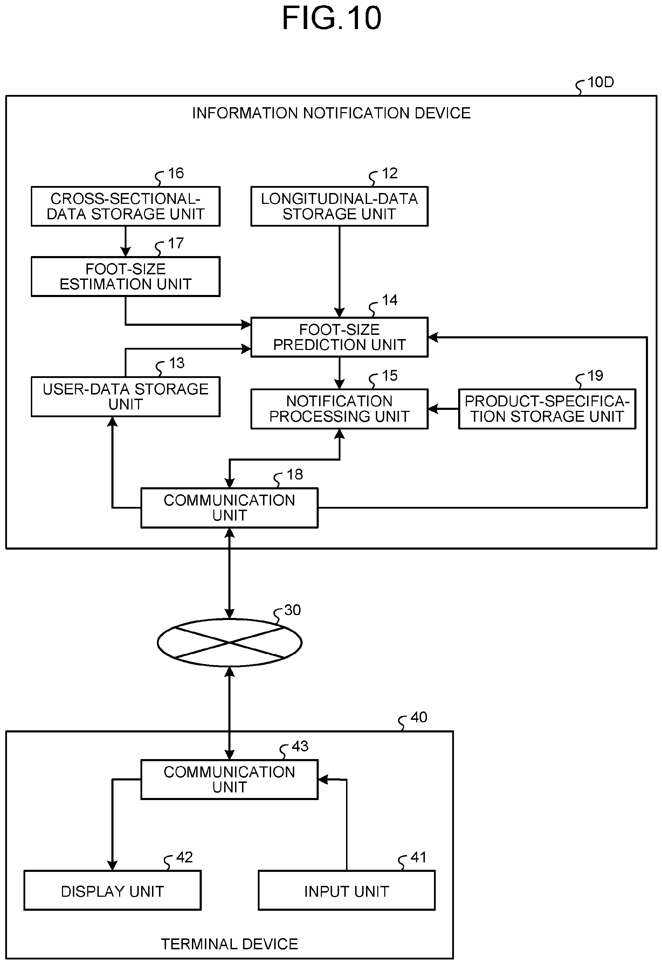

FIG. 10 is a diagram illustrating a configuration of an information notification device according to a fourth embodiment of the present invention. An information notification device 10D according to the fourth embodiment includes a product-specification storage unit 19 that stores a product specification of shoes, in addition to the information notification device 10C according to the third embodiment. In addition, user data contains information about shoes purchased by a prediction target person in the past. The information about the shoes purchased in the past contains information about the latest purchase time of shoes of the prediction target person and the size of the purchased shoes. A notification processing unit 15 displays, based on the size of the shoes purchased by the prediction target person in the past contained in the user data, a prediction result of a foot-size prediction unit 14, and the product specification stored in the product-specification storage unit 19, the type of recommended shoes for purchase and a recommended purchase timing to the prediction target person on a display unit 42 together with the prediction result of the change in foot size of the prediction target person.

The notification processing unit 15 displays, on the display unit 42, at least one candidate of recommended shoe purchase timing to the prediction target person, based on the standard deviation of the prediction of the change in foot size of the prediction target person, and the purchase time and the size of the purchased shoes contained in the information about the shoes purchased in the past.

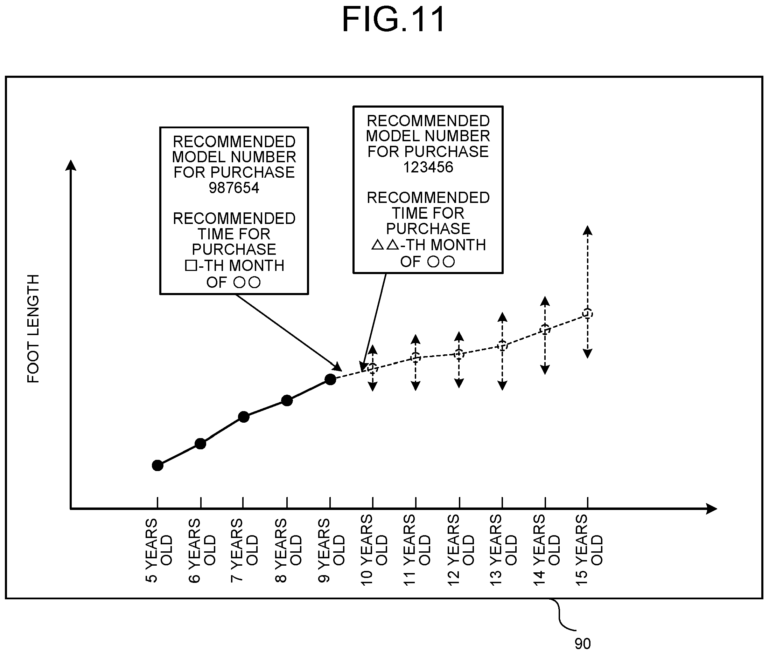

FIG. 11 is a diagram illustrating an example of a foot-size-change notification screen displayed on a terminal device by the information notification device according to the fourth embodiment. On a foot-size-change notification screen 90, a timing when purchase of shoes is recommended to the prediction target person and the type of recommended shoes for purchase are displayed. For example, it is possible to prompt the prediction target person to purchase shoes before the shoes purchased by the prediction target person in the past no longer fit the feet of the prediction target person. In addition, since the size of shoes varies slightly from model to model even if the sizes indicated are the same, it is possible to recommend the purchase of a model more suitable for the feet of the prediction target person. Therefore, the prediction target person can purchase shoes suitable for their feet before the shoes that have been wearing become unwearable, and thus it is possible to increase their satisfaction with the purchased shoes.

Note that, although two timings when purchase of shoes is recommended to the prediction target person are shown on the foot-size-change notification screen 90 illustrated in FIG. 11, only one timing or three or more timings when purchase of shoes is recommended to the prediction target person may be shown.

In addition, in displaying the recommended shoes for purchase, the notification processing unit 15 may display, on the display unit 42, an image of the shoes and the uniform resource locator of the website of an electronic commerce company that sells the recommended shoes for purchase.

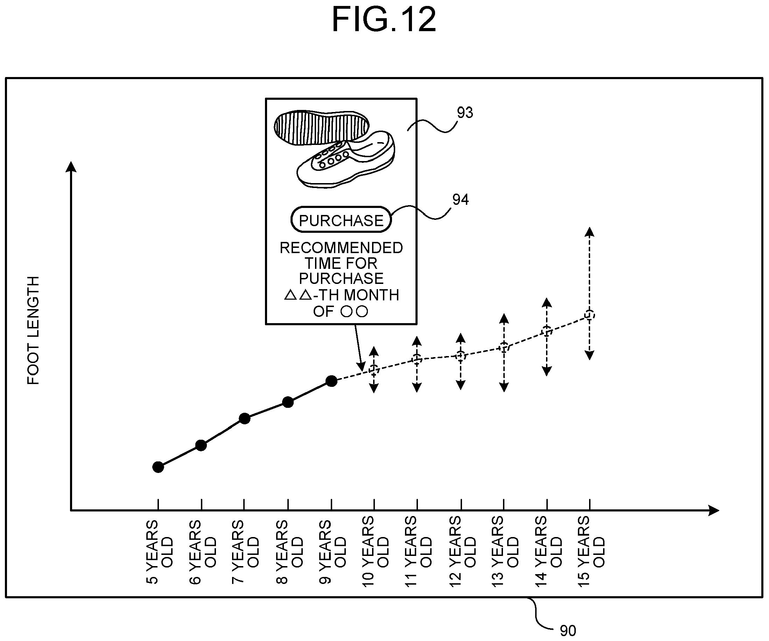

FIG. 12 is a diagram illustrating another example of the foot-size-change notification screen displayed on the terminal device by the information notification device according to the fourth embodiment. An image 93 of the recommended shoes for purchase and a purchase button 94 associated with the uniform resource locator of the website of the electronic commerce company that sells the shoes are displayed on the foot-size-change notification screen 90. By displaying the image 93 of the recommended shoes for purchase on the foot-size-change notification screen 90, it is possible to prevent the user from accidentally purchasing a different model of shoes when purchasing the shoes at a physical store. In addition, since the purchase button 94 is displayed on the foot-size-change notification screen 90, it is possible to display, on the terminal device 40, an electronic commerce screen on which the shoes can be purchased simply by pressing the purchase button 94 and to improve the user convenience. Note that, if the administrator of the information notification device 10D and the electronic commerce company are the same, the information notification device 10D may have an electronic commerce function.

In addition, the user data may contain information indicating the athletic ability of the prediction target person, and the notification processing unit 15 may determine a recommended shoe product for purchase based on the athletic ability of the prediction target person and the product specification. Examples of the athletic ability include a time of short distance race, a time of long distance race, a height of a vertical jump, and the number of repetitive side-to-side jumps, but are not limited thereto.

Especially in sports shoes, there can be multiple models for different wearers' abilities. In general, models for beginners are designed for ease of handling rather than performance, while models for advanced users are designed for performance rather than ease of handling. Therefore, if a person with low athletic ability wears an advanced model, the wearer cannot bring out the original performance of the shoes sufficiently, and cannot sufficiently exhibit their ability. Alternatively, if a person with high athletic ability wears a beginner model, the wearer is restricted by the performance of the shoes, and cannot sufficiently exhibit their ability. The information notification device 10D according to the fourth embodiment determines the type of recommended shoes for purchase based on the athletic ability of the prediction target person, and it is possible to recommend purchase of shoes with which the wearer is likely to exhibit their ability.

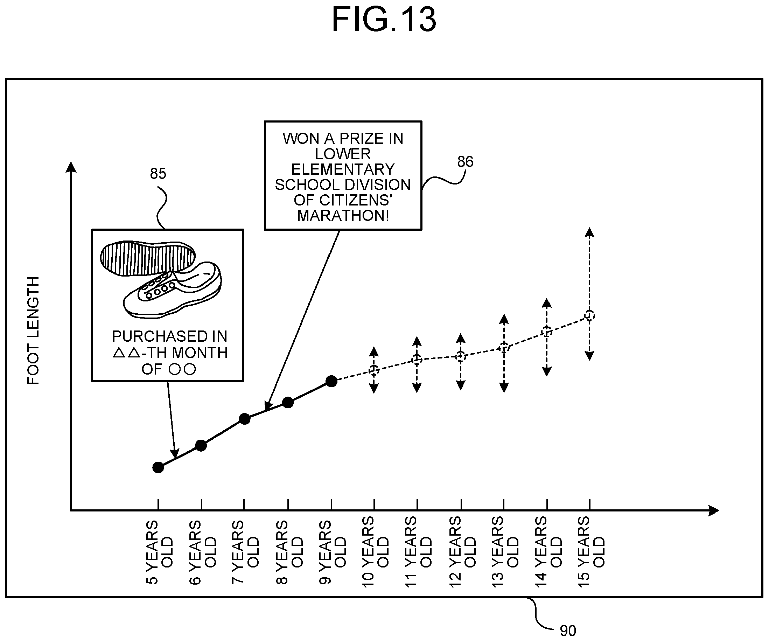

FIG. 13 is a diagram illustrating still another example of the foot-size-change notification screen displayed on the terminal device by the information notification device according to the fourth embodiment. The user data contains user registration data 86 registered by the prediction target person, and an image 85 of shoes purchased by the prediction target person in the past and user registration data 86 are displayed on the foot-size-change notification screen 90 together with the temporal change in foot size and the prediction result of the change in foot size until the current point in time. Here, the user registration data 86 is text data, but may be image data, moving image data, or audio data. In addition, the information notification device 10D may be connected to an information collection device, such as a so-called photo server, that stores image data and transmits, in response to a request from another device, the image data to the requesting device. In this case, the notification processing unit 15 can display the image data acquired from the information collection device on the foot-size-change notification screen 90. Note that the data acquired from the information collection device may be data other than image data. By displaying the image 85 of the shoes purchased by the prediction target person in the past and the user registration data 86 on the foot-size-change notification screen 90, it is possible to display the past foot length of the prediction target person and the past event in association with each other.

### (Fifth embodiment)

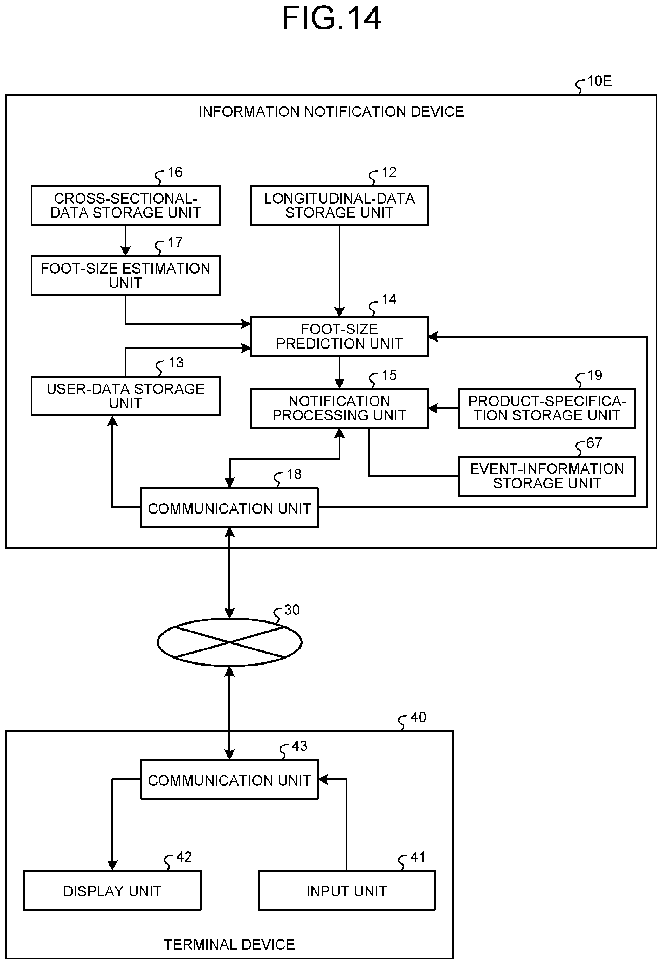

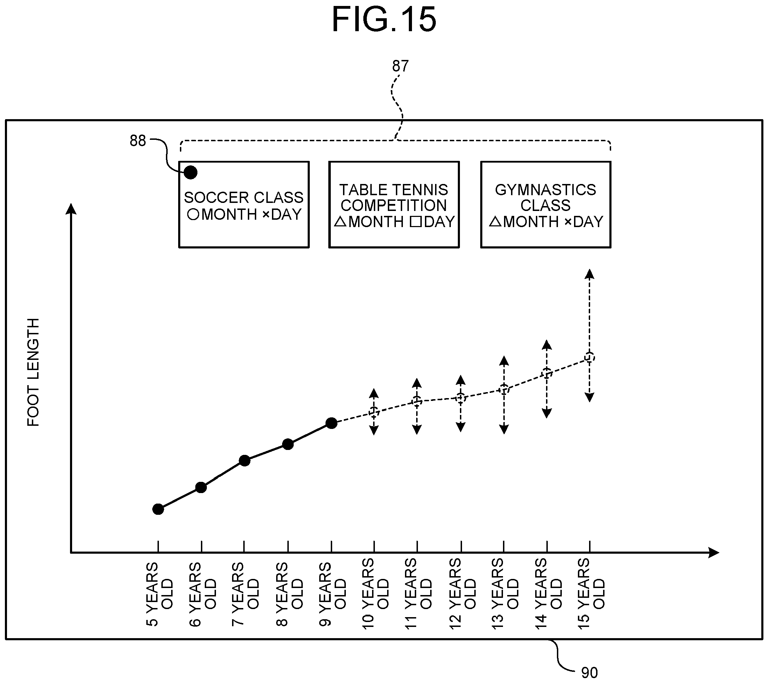

FIG. 14 is a diagram illustrating a configuration of an information notification device according to a fifth embodiment of the present invention. An information notification device 10E according to the fifth embodiment includes an event-information storage unit 67 that stores information about an event in which a prediction target person can participate, in addition to the information notification device 10D according to the fourth embodiment. FIG. 15 is a diagram illustrating an example of a foot-size-change notification screen displayed on a terminal device by the information notification device according to the fifth embodiment. On a foot-size-change notification screen 90, event information 87 is displayed together with the change in foot size of the prediction target person. In a terminal device 40, when an operation of expressing participation in an event whose information is displayed on a display unit 42 is performed through an input unit 41, a notification processing unit 15 causes an event detail screen 89 to pop up on the display unit 42.

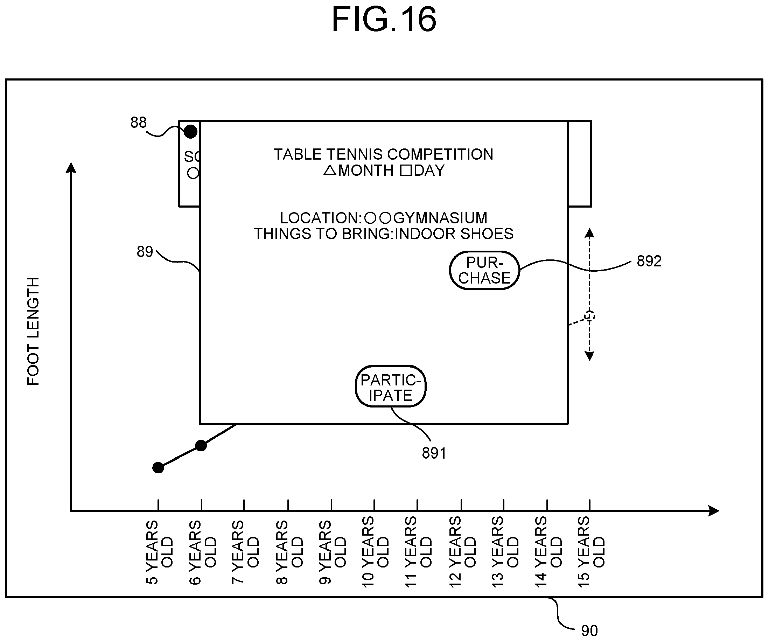

FIG. 16 is a diagram illustrating an example of the event detail screen displayed on the terminal device by the information notification device according to the fifth embodiment. On the event detail screen 89, a participation button 891 for applying for participation in the event and a purchase button 892 associated with the uniform resource locator of the website of an electronic commerce company that sells recommended shoes for use in participating in the event are displayed together with information such as the event venue and required items. By pressing the purchase button 892 in the input unit 41, the user can purchase the shoes through e-commerce, and it is possible to prevent the user from missing the event due to forgetting to purchasing the shoes. In addition, the user can easily apply for participation in the event by pressing the participation button 891 through the input operation on the input unit 41.

Note that, for an event for which a participation application has already been made, a mark 88 indicating that the application has been made can be displayed to prevent duplicate applications. In the event detail screen 89 for which a participation application has already been made, the participation button 891 may be hidden or the participation button 891 may be displayed in such a manner that it cannot be pressed.

Since the information notification device 10E according to the fifth embodiment displays, on the foot-size-change notification screen 90, the image of the recommended shoes for use when the prediction target person participates in the event, the prediction target person can easily recognize that the shoes are required for participating in the event. Furthermore, since the purchase button 892 for purchasing the recommended shoes for use is displayed on the event detail screen 89, the prediction target person can easily purchase the shoes required for participating in the event.

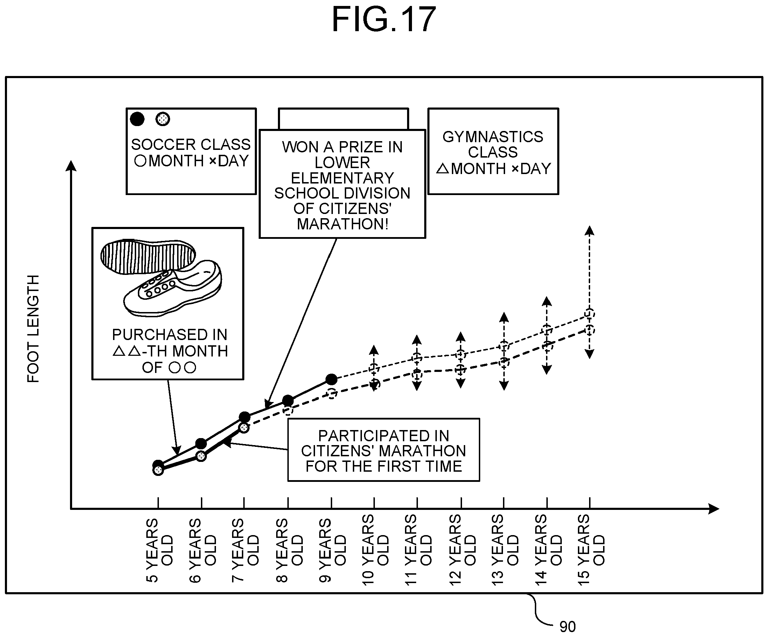

In each of the above embodiments, the number of prediction target persons is one, but predictions of changes in foot length of two or more prediction target persons may be displayed together. FIG. 17 is a diagram illustrating yet another example of the foot-size-change notification screen displayed on the terminal device by the information notification device according to the fifth embodiment. On the foot-size-change notification screen 90, the past changes in foot length of two siblings and predictions of the changes in foot length are displayed. By simultaneously displaying the past changes in foot length and the predictions of the changes in foot length of two persons, it is possible to easily compare how each person's foot length has changed. In the other embodiments, a similar effect can be obtained by displaying the past changes in foot lengths and predictions of the changes in foot length of two or more prediction target persons.

### (Sixth embodiment)

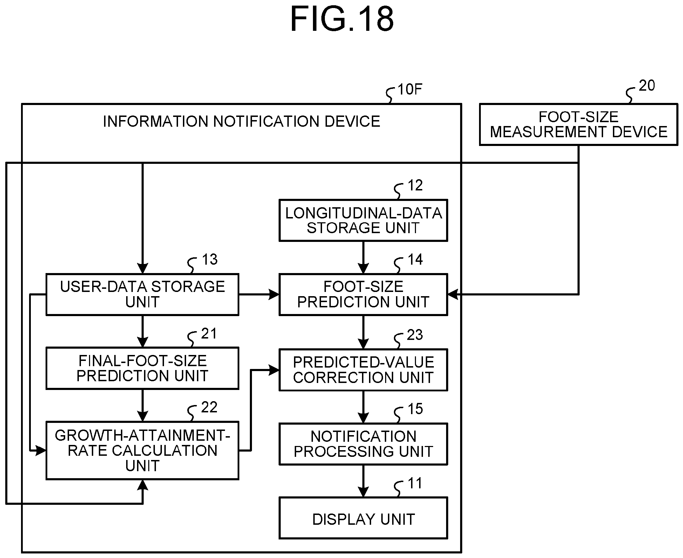

FIG. 18 is a diagram illustrating a configuration of an information notification device according to a sixth embodiment of the present invention. An information notification device 10F according to the sixth embodiment includes a final-foot-size prediction unit 21, a growth-attainment-rate calculation unit 22, and a predicted-value correction unit 23. The final-foot-size prediction unit 21 predicts a final foot size of a prediction target person based on at least one of a height and a foot size of at least one of a father and a mother of the prediction target person. The growth-attainment-rate calculation unit 22 calculates a current growth attainment rate of the prediction target person based on a current foot size of the prediction target person and the final foot size of the prediction target person. The predicted-value correction unit 23 corrects a predicted value of a change in foot size of the prediction target person in a period from a current point in time to a future point in time based on the current growth attainment rate of the prediction target person. In addition, user data stored in a user-data storage unit 13 contains at least one of the height and the foot size of at least one of the father and the mother of the prediction target person.

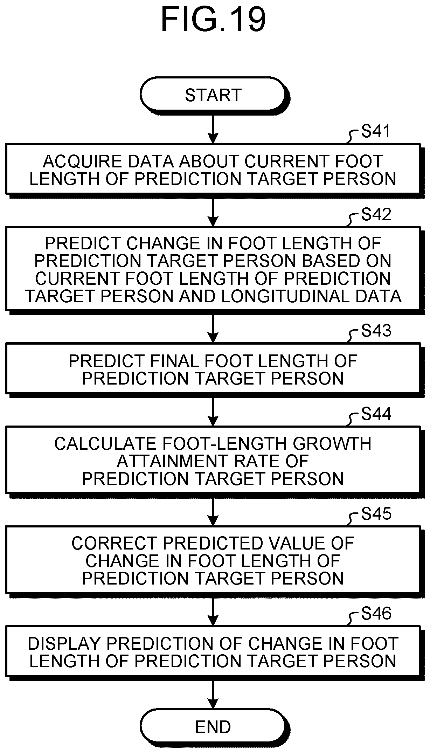

Hereinafter, the operation of the information notification device 10F according to the sixth embodiment is described, using the case where the foot size is foot length as an example. Even if the foot size is a foot girth, an arch height, or the like, a similar operation can be performed. FIG. 19 is a flowchart illustrating an operation procedure of the information notification device according to the sixth embodiment. In step S41, a foot-size prediction unit 14 acquires data about the current foot length of the prediction target person from a foot-size measurement device 20. In step S42, the foot-size prediction unit 14 predicts, based on the current foot length of the prediction target person and longitudinal data, a change in foot length of the prediction target person. In step S43, the final-foot-size prediction unit 21 predicts the final foot length of the prediction target person based on at least one of the height and the foot length of at least one of the father and the mother of the prediction target person.

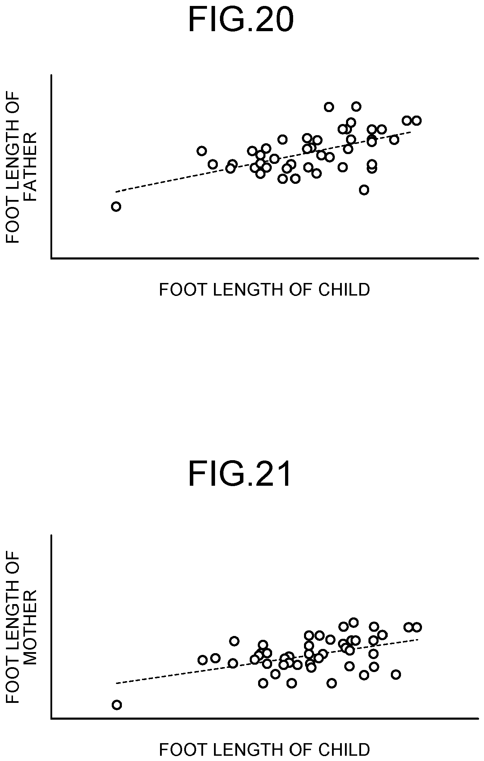

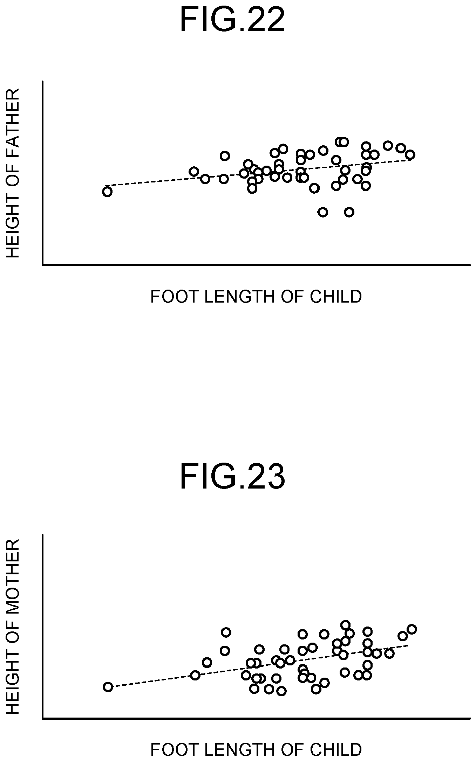

FIG. 20 is a scatter point illustrating an example of a correlation between the father's foot length and the child's foot length. FIG. 21 is a scatter point illustrating an example of a correlation between the mother's foot length and the child's foot length. FIG. 22 is a scatter point illustrating an example of a correlation between the father's height and the child's foot length. FIG. 23 is a scatter point illustrating an example of a correlation between the mother's height and the child's foot length. Broken lines in FIGS. 20, 21, 22, and 23 are regression lines. The points in each of FIGS. 20 and 21 are clustered near the regression line, which indicates a positive correlation between the father or mother's foot length and the child's foot length. Therefore, the final foot length, which is the foot length when the child stops growing, can be predicted based on the foot length of at least one of the father and the mother. Similarly, the points in each of FIGS. 22 and 23 are clustered near the regression line, which indicates a positive correlation between the father or mother's height and the child's foot length. Therefore, the final foot length can be predicted based on the height of at least one of the father and the mother. Since the shoe size corresponds to the foot length of a wearer, the final foot length of the child can be predicted based on the shoe size of at least one of the father and the mother, instead of the foot length of at least one of the father and the mother.

Note that, whether the child's foot length is more correlated with the father's foot length or the mother's foot length depends on the gender of the child. Similarly, whether the child's foot length is more correlated with the father's height or the mother's height depends on the gender of the child. Therefore, when predicting the final foot length of the prediction target person based on at least one of the heights and the foot lengths of both the father and the mother of the prediction target person, the final-foot-size prediction unit 21 may predict the final foot length of the prediction target person by weighting, based on the gender of the prediction target person, a predicted value based on at least one of the height and the foot length of the father of the prediction target person and a predicted value based on at least one of the height and the foot length of the mother of the prediction target person. By performing weighting based on the gender of the prediction target person to predict the final foot length of the prediction target person, it is possible to improve the accuracy of the prediction of the final foot length. Note that, the weight of the predicted value based on at least one of the height and the foot length of the father of the prediction target person and the predicted value based on at least one of the height and the foot length of the mother of the prediction target person, whichever has the smaller correlation, may be set to zero. That is, the weight of the predicted value based on at least one of the height and the foot length of the father of the prediction target person and the predicted value based on at least one of the height and the foot length of the mother of the prediction target person, whichever has the larger correlation, may be used to predict the final foot length of the prediction target person. That is, the final foot length of the child does not need to be determined based on the predicted values calculated separately from the foot length or the height of each of the father and the mother, but can be calculated from the regression line between the foot length or the height of one of the father and the mother and the foot length of the child.

In step S44, the growth-attainment-rate calculation unit 22 calculates a current-foot-length growth attainment rate of the prediction target person based on the current foot length of the prediction target person and the final foot length of the prediction target person.

The foot-length growth attainment rate is a ratio of the current foot length to the predicted value of the final foot length. For example, when the final foot length is 26 cm and the current foot length is 20 cm, the foot-length growth attainment rate is 20 a 26 = 79.6%. When the foot-length growth attainment rate is large, the growth margin to the final foot length is small. On the other hand, when the foot-length growth attainment rate is small, the growth margin to the final foot length is large. That is, when the foot-length growth attainment rate is large, the growth of the foot length is expected to be small in the future, and when the foot-length growth attainment rate is small, the growth of the foot length is expected to be large in the future.

In step S45, the predicted-value correction unit 23 corrects the predicted value of the change in foot length of the prediction target person in the period from the current point in time to the future point in time based on the current-foot-length growth attainment rate of the prediction target person.

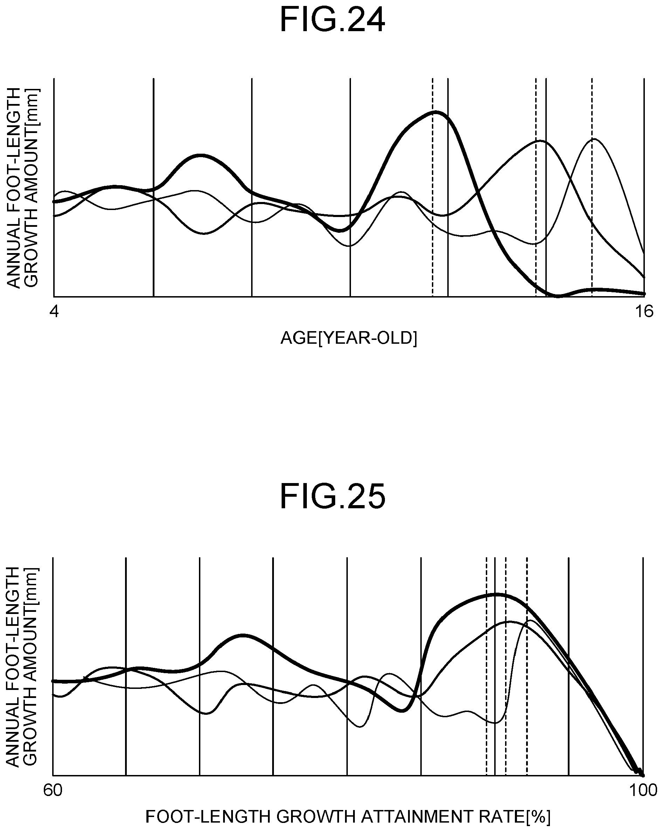

FIG. 24 is a diagram illustrating a relation between annual foot-length growth amount and age. FIG. 25 is a diagram illustrating a relation between annual foot-length growth amount and foot-length growth attainment rate. FIGS. 24 and 25 illustrate changes in annual foot-length growth amount of the same sample. In each of FIGS. 24 and 25, the broken line indicates the peak of growth where the annual foot-length growth amount is largest. As illustrated in FIG. 24, there are individual differences in the age at which the peak of growth, when the foot-length growth amount is large, appears. Therefore, it is difficult to correct the predicted value of the foot length change amount using the age of the prediction target person as a reference. On the other hand, as illustrated in FIG. 25, when the foot-length growth attainment rate is used as a reference, individual differences in the timing of the peak of annual foot-length growth amount are smaller. In this manner, the predicted-value correction unit 23 corrects the predicted value of the change in foot length based on the foot-length growth attainment rate of the prediction target person, and thus it is possible to improve the accuracy of the predicted value of the change in foot length of the prediction target person in the period from the current point in time to the future point in time.

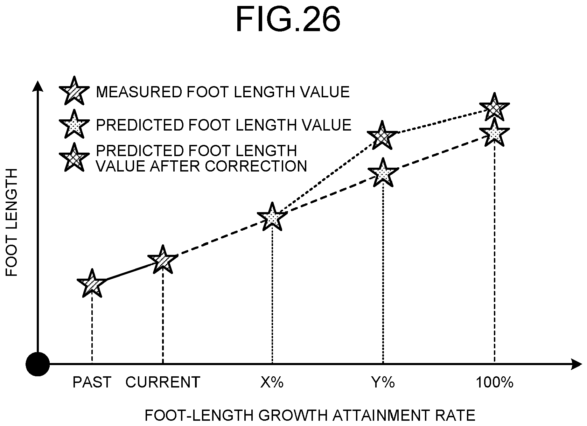

FIG. 26 is a diagram illustrating an effect of correction by the predicted-value correction unit of the information notification device according to the sixth embodiment. The final foot length predicted by the final-foot-size prediction unit 21 cannot be the same value as the final value of the foot length predicted based on the current foot length of the prediction target person and the longitudinal data. In FIG. 26, the final foot length predicted by the final-foot-size prediction unit 21 is larger than the final value of the foot length predicted based on the current foot length of the prediction target person and the longitudinal data.

In addition, in FIG. 26, a positive correction is applied to the foot-length growth amount between X% and Y% of the foot-length growth attainment rate, and a negative correction is applied to the foot-length growth amount between Y% and 100%. As a result, the graph showing the change in foot length is closer in shape to the actual change in foot length than the graph of the predicted value of the foot length predicted based on the current foot length of the prediction target person and the longitudinal data.

The information notification device 10F according to the sixth embodiment can predict the final foot length of the prediction target person with high accuracy, based on at least one of the height and the foot length of at least one of the father and the mother of the prediction target person. In addition, the information notification device 10F according to the sixth embodiment calculates the current-foot-length growth attainment rate of the prediction target person based on the final foot length predicted with high accuracy, and corrects the predicted value of the foot length based on the current-foot-length growth attainment rate. Therefore, the predicted value of the foot length after correction by the predicted-value correction unit 23 of the information notification device 10F according to the sixth embodiment is likely to have a smaller deviation from the actual foot length.

The operation in step S46 is similar to the operation in step S13 of the information notification device 10A according to the first embodiment. However, the change in foot length of the prediction target person to be displayed on the display unit 11 has been corrected based on the foot-length growth attainment rate of the prediction target person.

Since the information notification device 10F according to the sixth embodiment corrects the predicted value of the change in foot length based on the foot-length growth attainment rate, it is possible to predict the foot length of the prediction target person with high accuracy. Therefore, the user viewing the prediction of the change in foot length displayed on the display unit 11 can easily select shoes having the size suitable for the future foot length of the prediction target person.

### (Seventh embodiment)

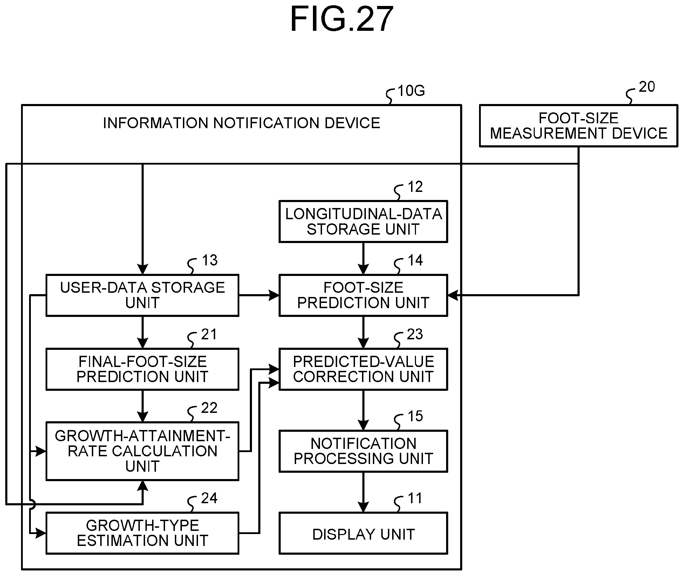

FIG. 27 is a diagram illustrating a configuration of an information notification device according to a seventh embodiment of the present invention. An information notification device 10G according to the seventh embodiment is different from the information notification device 10F according to the sixth embodiment in that the information notification device 10G includes a growth-type estimation unit 24 that estimates a foot-size growth type indicating a foot-size growth pattern of a prediction target person based on a past change in foot size of the prediction target person.

In the information notification device 10G according to the seventh embodiment, a predicted-value correction unit 23 further corrects, based on the foot-size growth type of the prediction target person, the predicted value of the foot size of the prediction target person in a period from a current point in time at which correction based on the current growth attainment rate of the prediction target person has been performed to a future point in time.

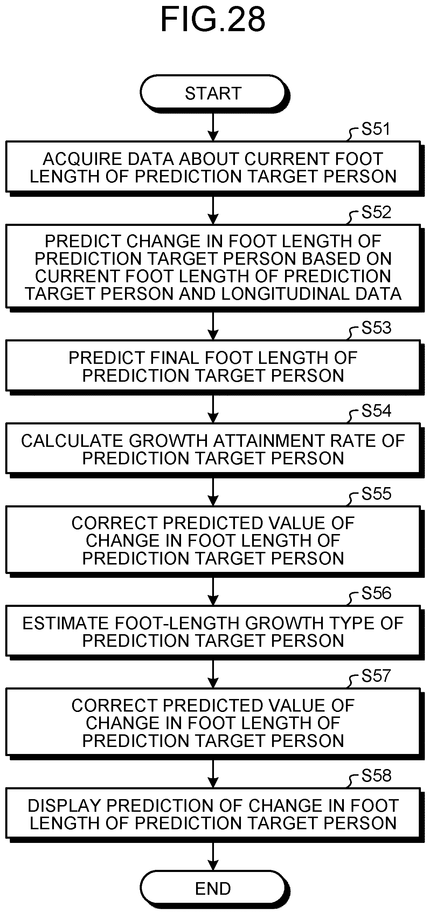

Hereinafter, the operation of the information notification device 10G according to the seventh embodiment is described, using the case where the foot size is foot length as an example. Even if the foot size is a foot girth, an arch height, or the like, a similar operation can be performed. FIG. 28 is a flowchart illustrating an operation procedure of the information notification device according to the seventh embodiment. The processing in steps S51 to S55 is similar to the processing in steps S41 to S45 of the information notification device 10F according to the sixth embodiment. In step S56, the growth-type estimation unit 24 estimates a foot-length growth type, which is a foot-size growth type indicating a foot- length growth pattern of the prediction target person, based on the past change in foot length of the prediction target person. Note that, when the foot size is a foot girth, the foot-size growth type estimated by the growth-type estimation unit 24 is a foot-girth growth type, and when the foot size is an arch height, the foot-size growth type estimated by the growth-type estimation unit 24 is an arch-height growth type.

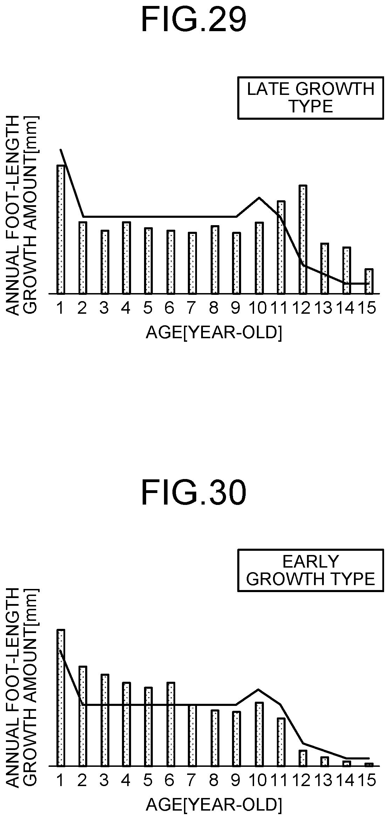

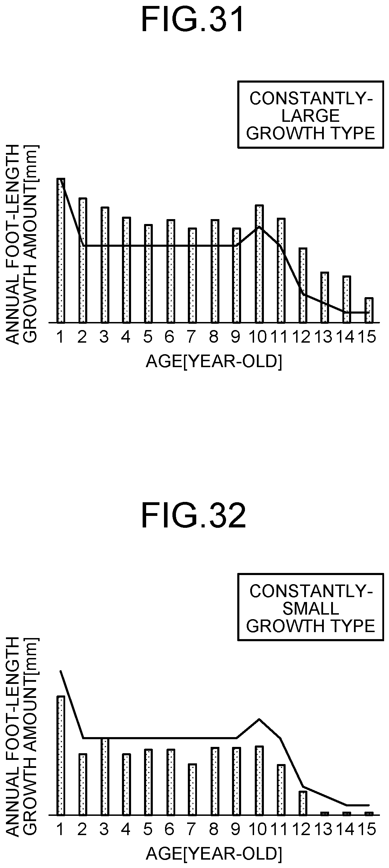

FIGS. 29, 30, 31, and 32 are diagrams each illustrating an example of a foot-length growth type of the prediction target person. The late growth type illustrated in FIG. 29 is a growth type in which the growth amount is less than the average during younger ages and the growth amount is equal to or larger than the average during older ages in the foot length growth period. The early growth type illustrated in FIG. 30 is a growth type in which the growth amount is equal to or larger than the average during younger ages and the growth amount is less than the average during older ages in the foot length growth period. The constantly-large growth type illustrated in FIG. 31 is a growth type in which the growth amount is always equal to or larger than the average in the foot length growth period. The constantly-small growth type illustrated in FIG. 32 is a growth type in which the growth amount is always less than the average in the foot length growth period. The foot-length growth type is not limited to the four illustrated types.

When the current foot length is equal to or less than the average and the final foot length is about the average, the growth-type estimation unit 24 determines that the foot-length growth type of the prediction target person is the late growth type. When the current foot length exceeds the average and the final foot length is about the average, the growth-type estimation unit 24 determines that the foot-length growth type of the prediction target person is the early growth type. When the current foot length exceeds the average and the final foot length is equal to or larger than the average, the growth-type estimation unit 24 determines that the foot-length growth type of the prediction target person is the constantly-large growth type. When the current foot length is equal to or less than the average and the final foot length is less than the average, the growth-type estimation unit 24 determines that the foot-length growth type of the prediction target person is the constantly-small growth type.

In step S57, the predicted-value correction unit 23 corrects the predicted value of the change in foot length of the prediction target person in the period from the current point in time to the future point in time based on the foot-length growth type of the prediction target person.

Even if the current foot-length growth attainment rate is the same, the amount of the change in foot length from the current point in time varies depending on the foot-length growth type. Therefore, the predicted-value correction unit 23 further corrects, based on the foot-length growth type of the prediction target person, the predicted value of the foot length of the prediction target person in the period from the current point in time at which correction based on the current-foot-length growth attainment rate of the prediction target person has been performed to the future point in time. That is, when the prediction target person is the late growth type or the constantly-large growth type, the predicted value of the foot length is corrected to increase the growth amount after the current point in time. On the other hand, when the prediction target person is the early growth type or the constantly-small growth type, the predicted value of the foot length is corrected to reduce the growth amount after the current point in time.

The operation in step S58 is similar to the operation in step S46 of the information notification device 10F according to the sixth embodiment. However, the value of the change in foot length of the prediction target person displayed on the display unit 11 has been corrected based on the foot-length growth attainment rate and the foot-length growth type of the prediction target person.

As described above, since the information notification device 10G according to the seventh embodiment further performs correction based on the foot-length growth type of the prediction target person, it is possible to predict the change in foot length of the prediction target person with high accuracy.

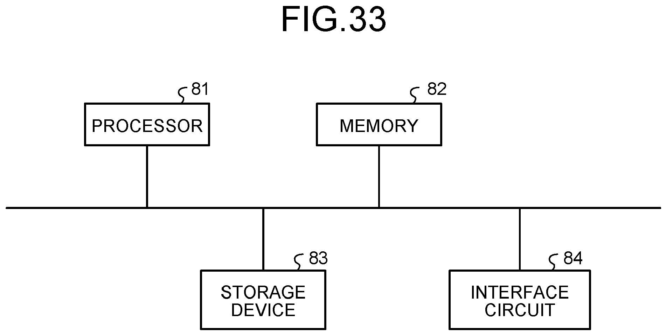

Next, a hardware configuration of each of the information notification devices 10A, 10B, 10C, 10D, 10E, 10F, and 10G in the above embodiments is described. FIG. 33 is a diagram illustrating a hardware configuration example of the information notification device according to the first to seventh embodiments. FIG. 33 illustrates the hardware configuration when the functions of each of the information notification devices 10A, 10B, 10C, 10D, 10E, 10F, and 10G are implemented by using hardware that executes a program.

The information notification devices 10A, 10B, 10C, 10D, 10E, 10F, and 10G each include a processor 81 that executes various processes, a memory 82 that is a built-in memory, a storage device 83 that stores information, and an interface circuit 84 for inputting information to the information notification devices 10A, 10B, 10C, 10D, 10E, 10F, and 10G and outputting information from the information notification devices 10A, 10B, 10C, 10D, 10E, 10F, and 10G. The processor 81 loads a program stored in the storage device 83 into the memory 82 and executes the program. The longitudinal-data storage unit 12, the user-data storage unit 13, the cross-sectional-data storage unit 16, the product-specification storage unit 19, and the event-information storage unit 67 are implemented by the storage device 83. The communication unit 18 is implemented by the interface circuit 84.

The configurations described in the above embodiments merely show examples of the present invention and can be combined with another known technique, and a part of each configuration can be omitted or changed without departing from the gist of the present invention. For example, in the above description, the example of a change in foot size of a child is used, but it can also be applied to a change in foot size of an adult or an elderly person.

### Reference Signs List

10A, 10B, 10C, 10D, 10E, 10F, 10G INFORMATION NOTIFICATION DEVICE
11, 42 DISPLAY UNIT
12 LONGITUDINAL-DATA STORAGE UNIT
13 USER-DATA STORAGE UNIT
14 FOOT-SIZE PREDICTION UNIT
15 NOTIFICATION PROCESSING UNIT
16 CROSS-SECTIONAL-DATA STORAGE UNIT
17 FOOT-SIZE ESTIMATION UNIT
18, 43 COMMUNICATION UNIT
19 PRODUCT-SPECIFICATION STORAGE UNIT
20 FOOT-SIZE MEASUREMENT DEVICE
21 FINAL-FOOT-SIZE PREDICTION UNIT
22 GROWTH-ATTAINMENT-RATE CALCULATION UNIT
23 PREDICTED-VALUE CORRECTION UNIT
24 GROWTH-TYPE ESTIMATION UNIT
30 NETWORK
40 TERMINAL DEVICE
41 INPUT UNIT
50 FOOT-SIZE INPUT SCREEN
51 MEASUREMENT-DATE INPUT FIELD
52 FOOT-LENGTH INPUT FIELD
53 COMPLETE BUTTON
67 EVENT-INFORMATION STORAGE UNIT
81 PROCESSOR
82 MEMORY
83 STORAGE DEVICE
84 INTERFACE CIRCUIT
85 IMAGE OF SHOES PURCHASED BY PREDICTION TARGET PERSON IN PAST
86 USER REGISTRATION DATA
87 EVENT INFORMATION
88 MARK
89 EVENT DETAIL SCREEN
90 FOOT-SIZE-CHANGE NOTIFICATION SCREEN
91 STANDARD DEVIATION REGION
92 LINE INDICATING AVERAGE FOOT LENGTH
93 IMAGE OF RECOMMENDED SHOES FOR PURCHASE
94, 892 PURCHASE BUTTON
891 PARTICIPATION BUTTON

## Claims

1. An information notification device comprising:
a longitudinal-data storage unit configured to accumulate, for a plurality of samples, longitudinal data indicating a temporal change in foot size of one sample;
a user-data storage unit configured to store user data containing a gender, an age, and a past foot size of a prediction target person;
a foot-size prediction unit configured to predict, based on a current foot size of the prediction target person and the longitudinal data, a change in foot size of the prediction target person in a period from a current point in time to a future point in time; and
a notification processing unit configured to display, on a display unit, the prediction of the change in foot size of the prediction target person in the period from the current point in time to the future point in time.

2. The information notification device according to claim 1, wherein the notification processing unit is configured to display, on the display unit, the prediction of the change in foot size of the prediction target person in a diagram or an image.

3. The information notification device according to claim 2, wherein the diagram represents the prediction of the change in foot size of the prediction target person as a point on a plane with foot size on a vertical axis and time on a horizontal axis.

4. The information notification device according to claim 3, wherein the diagram is displayed with a line interpolating between points together with the point and displayed on the display unit.

5. The information notification device according to claim 3 or 4, wherein the notification processing unit is configured to display, on the display unit, a standard deviation range in the period from the current point in time to the future point in time together with the point.

6. The information notification device according to any one of claims 1 to 5, further comprising:
a final-foot-size prediction unit configured to predict a final foot size of the prediction target person based on at least one of a height and a foot size of at least one of a father and a mother of the prediction target person;
a growth-attainment-rate calculation unit configured to calculate a current growth attainment rate of the prediction target person based on the current foot size of the prediction target person and the final foot size of the prediction target person; and
a predicted-value correction unit configured to correct a predicted value of the change in foot size of the prediction target person in the period from the current point in time to the future point in time based on the current growth attainment rate of the prediction target person.

7. The information notification device according to claim 6, further comprising:
a growth-type estimation unit configured to estimate a foot-size growth type indicating a foot-size growth pattern of the prediction target person based on a past change in foot size of the prediction target person, wherein
the predicted-value correction unit is configured to further correct, based on the foot-size growth type of the prediction target person, the predicted value of the change in foot size of the prediction target person in the period from the current point in time to the future point in time corrected based on the current growth attainment rate of the prediction target person.

8. The information notification device according to claim 6 or 7, wherein the final-foot-size prediction unit is configured to predict, when predicting the final foot size of the prediction target person based on at least one of heights and foot sizes of both the father and the mother of the prediction target person, the final foot size of the prediction target person by weighting, based on the gender of the prediction target person, a predicted value based on at least one of the height and the foot size of the father of the prediction target person and a predicted value based on at least one of the height and the foot size of the mother of the prediction target person.

9. The information notification device according to any one of claims 1 to 8, further comprising:
a product-specification storage unit configured to store a product specification of shoes, wherein
the user data contains information about shoes purchased by the prediction target person in the past, and
the notification processing unit is configured to display, on the display unit, a type of recommended shoes for purchase and a recommended purchase timing to the prediction target person together with a prediction result of the change in foot size of the prediction target person, based on a size of the shoes purchased by the prediction target person in the past contained in the user data, the prediction result of the foot-size prediction unit, and the product specification stored in the product-specification storage unit.

10. The information notification device according to claim 9, wherein
the user data contains information indicating athletic ability of the prediction target person, and
the notification processing unit is configured to determine the recommended shoe product for purchase based on the athletic ability of the prediction target person and the product specification.

11. The information notification device according to claim 9 or 10, wherein
the information about the shoes purchased in the past contains information about a latest shoe purchase time and a size of the purchased shoes of the prediction target person, and
the notification processing unit is configured to display, on the display unit, at least one candidate of recommended shoe purchase timing to the prediction target person, based on a standard deviation of the prediction of the change in foot size of the prediction target person in the period from the current point in time to the future point in time, and the purchase time and the size of the purchased shoes contained in the information about the shoes purchased in the past.

12. The information notification device according to any one of claims 9 to 11, wherein the notification processing unit is configured to display, on the display unit, an image of the recommended shoes for purchase to the prediction target person and a uniform resource locator of a website of an electronic commerce company selling the recommended shoes for purchase.

13. The information notification device according to any one of claims 9 to 12, further comprising:
an event-information storage unit configured to stores information about an event in which the prediction target person can participate, wherein
the notification processing unit is configured to display, on the display unit, the information about the event together with the prediction result of the change in foot size of the prediction target person and to display, when an operation of expressing participation in the event is performed on the display unit, a uniform resource locator of a website of an electronic commerce company selling recommended shoes for use in participating in the event on the display unit.

14. The information notification device according to any one of claims 1 to 13, wherein the notification processing unit is configured to display, on the display unit, a temporal change in foot size of the prediction target person until the current point in time together with the prediction of the change in foot size of the prediction target person.

15. The information notification device according to claim 14, wherein the notification processing unit is configured to display, on the display unit, a graph showing temporal changes in foot size of two or more prediction target persons until the current point in time and the prediction of the change in foot size of the prediction target person from the current point in time to the future point in time.

16. The information notification device according to any one of claims 1 to 15, wherein
the user data contains user registration data registered by the prediction target person, and
the notification processing unit is configured to display, on the display unit, at least one of the image of the shoes purchased by the prediction target person in the past, the user registration data, and information acquired from an information collection device, together with the temporal change in foot size until the current point in time and the prediction result of the change in foot size from the current point in time to the future point in time.

17. The information notification device according to any one of claims 1 to 16, wherein
the user data contains data about a height of the prediction target person or a size of shoes owned by the prediction target person, and
the information notification device further comprises:
a cross-sectional-data storage unit configured to store cross-sectional data accumulating, for each of gender and age, data about foot sizes of a plurality of samples; and
a foot-size estimation unit configured to estimate the current foot size of the prediction target person based on the user data and the cross- sectional data.

18. The information notification device according to claim 17, wherein
the cross- sectional data contains data about a foot size for each age of at least one of a parent, an older brother, and an older sister of the prediction target person, and
the foot-size prediction unit is configured to correct the predicted value of the change in foot size of the prediction target person in the period from the current point in time to the future point in time, based on the data about the foot size for each age of at least one of the parent, the older brother, and the older sister of the prediction target person.
